# EUROPÄISCHE PATENTANMELDUNG

(11) **EP 2 249 102 A2**
(43) Veröffentlichungstag der Anmeldung: **10.11.2010**
(21) Anmeldenummer: 10401062.4
(22) Anmeldetag: 29.04.2010
(51) Int. Cl.: F24J 2/52, F16B 2/06, F16B 7/04, F16B 37/04

(54) **Verbinder für eine Profilschiene**

(30) Priorität: 08.05.2009 DE 102009020530
(71) Anmelder: fischerwerke GmbH & Co. KG, 72178 Waldachtal (DE)
(72) Erfinder: Böhmel, Philipp, 70565 Stuttgart (DE); Linka, Martin, 72160 Horb a.N. (DE)

(57) **Zusammenfassung**

Die Erfindung betrifft einen Verbinder (1) für eine Profilschiene (28) zur Befestigung von beispielsweise Solarmodulen. Die Erfindung schlägt vor, den Verbinder (1) mit einem Grundkörper (2) auszubilden, der einen Haken (15) aufweist, der eine hinterschnittene Längsnut der Profilschiene (28) hintergreift. Eine Spannpratze (3) greift in eine seitliche Längsnut (31) der Profilschiene (28) ein und spannt die Profilschiene (28) auf den Grundkörper (2). Eine schräge Gleitfläche (12), auf die die Spannpratze (3) eine Längskante (33) der Profilschiene (28) drückt, drückt die Profilschiene (28) in und unter den Haken (15).

## Beschreibung

Die Erfindung betrifft einen Verbinder für eine Profilschiene mit den Merkmalen des Oberbegriffs des Anspruchs 1. Die Profilschiene weist eine hinterschnittene Längsnut auf einer Längsseite und eine weitere Längsnut an einer angrenzenden Längsseite auf. Die weitere Längsnut kann, muss aber nicht, hinterschnitten sein. Die beiden die Längsnuten aufweisenden Längsseiten der Profilschiene stehen üblicherweise rechtwinklig zueinander. Der Verbinder dient zum Verbinden der Profilschiene mit einem anderen Bauteil, beispielsweise einem Dachhaken oder auch mit einer weiteren Profilschiene, die die eine Profilschiene beispielsweise kreuzt. Mit solchen Profilschienen werden unter anderem Unterkonstruktionen für Solarmodule auf Dächern und Freiflächen hergestellt.

Aus der EP 2 009 293 A2 ist ein Verbinder für eine Profilschiene, die eine hinterschnittene Längsnut auf einer Längsseite aufweist, bekannt. Der bekannte Verbinder weist einen Grundkörper und einen Keil auf, wobei der Grundkörper eine Gleitrampe, auf der der Keil verschiebbar ist, und eine Grundplatte, in die die Gleitrampe unter einem Winkel übergeht, aufweist. Die Grundplatte weist einen Hakensteg, also einen im Querschnitt hakenförmigen Steg, ungefähr in ihrer Mitte auf, der in Richtung zur Gleitrampe weist. Der Hakensteg steht von einer Seite der Grundplatte ab, in die die Gleitrampe übergeht. Zur eindeutigen Bezeichnung wird diese Seite der Grundplatte als Oberseite bezeichnet. Die den Hakensteg aufweisende Oberseite der Grundplatte des Grundteils des bekannten Verbinders bildet eine Auflage für die die hinterschnittene Längsnut aufweisende Längsseite der Profilschiene. Mit einer Schraube lässt sich der auf der Gleitrampe verschiebbare Keil nach unten spannen und verschiebt sich dabei auf der Gleitrampe nach unten, d.h. auf die Grundplatte und den Hakensteg zu. Ein Gummiring zieht den Keil vom Hakensteg weg, wenn der Keil nicht mit der Schraube nach unten gespannt ist. Zur Befestigung wird die Profilschiene mit ihrer die hinterschnittene Längsnut aufweisenden Längsseite auf die die Auflage bildende Oberseite der Grundplatte des Grundkörpers des bekannten Verbinders aufgesetzt, so dass der Hakensteg in die hinterschnittene Längsnut eintritt. Anschließend wird die Schraube festgezogen und damit der Keil auf der Gleitrampe nach unten und in Richtung des Hakenstegs verschoben. Der Keil gelangt in Anlage an eine Längsseite der Profilschiene und verschiebt diese auf der Grundplatte des Grundkörpers so, dass der Hakensteg in Hintergriff an der hinterschnittenen Längsnut der Profilschiene gelangt. Die Profilschiene ist dadurch auf dem Grundkörper des Verbinders befestigt. Gehalten ist die Profilschiene durch den Hintergriff des Hakenstegs des Grundkörpers des bekannten Verbinders an der hinterschnittenen Längsnut der Profilschiene. Der Keil hält die Profilschiene in Eingriff mit dem Hakensteg, der Keil selbst hält die Profilschiene jedoch nicht auf dem Grundkörper.

Aufgabe der Erfindung ist eine Verbesserung des mechanischen Halts einer Profilschiene auf bzw. an einem Verbinder der vorstehend erläuterten Art.

Diese Aufgabe wird erfindungsgemäß durch die Merkmale des Anspruchs 1 gelöst. Der erfindungsgemäße Verbinder weist einen Haken auf einer Auflage für die zu befestigende Profilschiene auf. Der Haken ist insbesondere wie beim vorbekannten Verbinder ein Hakensteg. In befestigtem Zustand hintergreift er die hinterschnittene Längsnut der auf der Auflage aufliegenden bzw. an der Auflage anliegenden Profilschiene.

Der Grundkörper des erfindungsgemäßen Verbinders weist eine zur Auflage hin fallende, dem Haken zugewandte Gleitfläche für die Profilschiene auf. Der Haken ist der Gleitfläche zugewandt. Die Gleitfläche kann kurz sein.

Außerdem weist der erfindungsgemäße Verbinder eine Spannpratze auf, die mit Abstand von der Auflage am Grundkörper angeordnet ist. Die Spannpratze ist parallel zur Aufnahme beweglich und mit einer Spanneinrichtung in Richtung der Auflage spannbar, wobei die Spanneinrichtung eine Schraube aufweisen kann, die hier als Spannschraube bezeichnet wird. Sie überdeckt senkrecht zur Auflage gesehen mit einem Ende die Gleitfläche und einen angrenzenden Bereich der Auflage. Durch Verschieben der Spannpratze parallel zur Auflage lässt sich die Überdeckung verkleinern und ggf. ganz aufheben.

Der Begriff "Haken" ist weniger anhand seiner Form und seines Aussehens als vielmehr anhand seiner Funktion, die hinterschnittene Längsnut der Profilschiene zu hintergreifen und die Profilschiene an bzw. auf der Auflage des Grundkörpers des erfindungsgemäßen Verbinders zu halten, auszulegen. Ebenso ist der Begriff "Spannpratze" anhand ihrer Funktion, in die weitere Längsnut der Profilschiene an der angrenzenden Längsfläche einzutauchen und die Profilschiene dort nach unten, d.h. gegen die Auflage des Grundkörpers zu spannen, auszulegen.

Zur Befestigung wird die Profilschiene mit ihrer die hinterschnittene Längsnut aufweisenden Längsseite auf die Auflage des Grundkörpers aufgesetzt, so dass der Haken in die hinterschnittene Längsnut eintritt. Eine Längskante der Profilschiene kann auf der zur Auflage hin fallenden Gleitfläche aufliegen. Die Gleitfläche kann eben oder beispielsweise auch gewölbt sein. Die angrenzende Längsseite der Profilschiene mit der weiteren Längsnut ist der Spannpratze zugewandt, so dass die Spannpratze in die weitere Längsnut der Profilschiene eintaucht. Die Spannpratze wird in Richtung der Auflage gespannt, sie greift an einer Nutwange der weiteren Längsnut an und drückt zunächst die Längskante der Profilschiene auf die Gleitfläche. Dadurch gleitet die Längskante der Profilschiene auf der Gleitfläche nach unten, d.h. in Richtung zur Auflage, wodurch die die hinterschnittene Längsnut aufweisende Längsseite der Profilschiene in Auflage auf bzw. in Anlage an die Auflage des Grundkörpers gelangt. Damit einhergehend gelangt der Haken auf der Auflage des Grundkörpers in Hintergriff an der hinterschnittenen Längsnut der Profilschiene. Die Profilschiene ist zum einen durch den Hintergriff des Hakens an der hinterschnittenen Längsnut und zum anderen durch die in die weitere Längsnut eingreifende Spannpratze, die die Profilschiene gegen die Auflage am Grundkörper des erfindungsgemäßen Verbinders spannt, befestigt. Im Vergleich zu einer Befestigung ausschließlich mit dem die hinterschnittene Längsnut hintergreifenden Haken ist die Verbindung durch den zusätzlichen Eingriff der Spannpratze in der weiteren Längsnut der Profilschiene verbessert.

Vorzugsweise verengt sich ein Zwischenraum zwischen dem Haken und der Auflage in Richtung von der Gleitfläche weg. Dadurch drückt der Haken die Profilschiene, wenn sie beim Spannen der Spannpratze in den Haken hinein gedrückt wird, gegen die Auflage, die Profilschiene lässt sich spielfrei und vorzugsweise mit Vorspannung gegen die Auflage drücken.

Um den Grundkörper beispielsweise durch Strangpressen oder Strangziehen herstellen zu können, sieht eine Ausgestaltung der Erfindung eine gleich bleibende Schnittfläche über eine Breite des Grundkörpers vor. Mit Schnittfläche ist je nach Blickrichtung die Längs- oder Querschnittsfläche gemeint.

Eine Ausgestaltung der Erfindung sieht einen Lagerbock für die Spannpratze vor, der sich an einem dem Haken fernen Ende der Gleitfläche des Grundkörpers befindet. Der Lagerbock ist etwas niedriger als ein Abstand der weiteren Längsnut der Profilschiene von der die hinterschnittene Längsnut aufweisenden Längsseite. Genau genommen ist es der Abstand der Nutwange der weiteren Längsnut, die sich näher an der die hinterschnittene Längsnut aufweisenden Längsseite der Profilschiene befindet. Die Spannpratze ist, wenn sie in Richtung der Auflage des Grundkörpers gespannt ist, stabil auf dem Lagerbock gehalten und sie spannt die Profilschiene gegen die Auflage.

Eine Ausgestaltung der Erfindung sieht eine Schräge an der Spannpratze vor. Die Schräge befindet sich an dem die Auflage des Grundkörpers überdeckenden Rand und ist der Auflage zugewandt. Beim Aufsetzen der Profilschiene auf den Grundkörper gelangt die weitere Längsnut der Profilschiene unter die Schräge der Spannpratze und drückt die Spannpratze dabei nach oben, d.h. weg von der Auflage. Das vereinfacht das Aufsetzen der Profilschiene auf den Grundkörper und das dabei zugleich erfolgende Eintauchen der Spannpratze in die weitere Längsnut.

Eine Ausgestaltung der Erfindung sieht ein Federelement vor, das die Spannpratze im Sinne einer größer werdenden Überdeckung der Auflage beaufschlagt. Das Federelement kann beispielsweise ein Gummiring sein. Das Federelement hält die Spannpratze verliersicher am Grundkörper und beaufschlagt die Spannpratze in die vorgesehene Spannposition. Das Federelement vereinfacht die Handhabung des Verbinders beim Aufsetzen und Befestigen der Profilschiene, die Spannpratze muss nicht von Hand gehalten werden, sondern wird vom Federelement gehalten, das die Spannpratze auch in die weitere Längsnut der Profilschiene hinein beaufschlagt.

Eine Ausgestaltung der Erfindung sieht ein Drehsicherungselement vor, das an einem Seitenrand des Grundkörpers an einer Unterseite übersteht, die der Auflage abgewandt ist. Ist der Verbinder beispielsweise auf einem Dachhaken befestigt, liegt das Drehsicherungselement an einem Seitenrand des Dachhakens an und hält den Verbinder drehfest am Dachhaken. Die Benennung als "Unterseite" dient der eindeutigen Bezeichnung und setzt nicht zwingend voraus, dass sich die als "Unterseite des Grundkörpers" bezeichnete Seite auch wirklich unten befindet. Die Unterseite ist wie erwähnt der Auflage abgewandt, die auch als Oberseite des Grundkörpers aufgefasst werden kann.

Eine Ausgestaltung der Erfindung sieht eine gelenkige Verbindung der Spannpratze mit dem Grundkörper vor, die insbesondere an dem Lagerbock des Grundkörpers vorgesehen ist, wenn ein solcher vorhanden ist. Die gelenkige Verbindung kann lösbar sein und beispielsweise einen Hakensteg der Spannpratze aufweisen, der in eine Nut, an einem Steg oder ebenfalls einem Hakensteg des Grundkörpers angreift. Geometrie und Spiel sind so gewählt, dass die Verbindung gelenkig ist. Die gelenkige Verbindung befindet sich vorzugsweise an dem Rand der Spannpratze, der einer befestigten Profilschiene abgewandt ist. Die gelenkige Verbindung ermöglicht ein Schwenken der Spannpratze nach oben, d.h. weg von der Auflage, und erleichtert die Befestigung der Profilschiene bzw. das Eintauchen der Spannpratze in die weitere Längsnut der Profilschiene beim Aufsetzen der Profilschiene auf die Auflage des Grundkörpers des erfindungsgemäßen Verbinders. Zudem erhöht die gelenkige Verbindung den Halt der festgespannten Spannpratze am Grundteil und verbessert damit den mechanischen Halt der Verbindung.

Eine Ausgestaltung der Erfindung sieht eine Verdrehsicherung der Spannpratze am Grundkörper des Verbinders vor. Die gelenkige Verbindung der Spannpratze mit dem Grundkörper kann zugleich auch die Verdrehsicherung bilden. Die Verdrehsicherung vermeidet ein Lösen der Spannschraube der Spanneinrichtung durch Verdrehen der Spannpratze. Die gelenkige Verbindung und/oder die Verdrehsicherung unterstützen eine vorgesehene Positionierung der Spannpratze am Grundkörper beim Aufsetzen der Profilschiene.

Die Erfindung wird nachfolgend anhand eines in der Zeichnung dargestellten Ausführungsbeispiels näher erläutert. Es zeigen:
- Figuren 1 und 2: einen erfindungsgemäßen Verbinder in perspektivischer Darstellung; und
- Figuren 3 bis 5: die Befestigung einer Profilschiene an dem Verbinder aus Figur 1 mit dem Verbinder in Seitenansicht und der Profilschiene im Querschnitt.

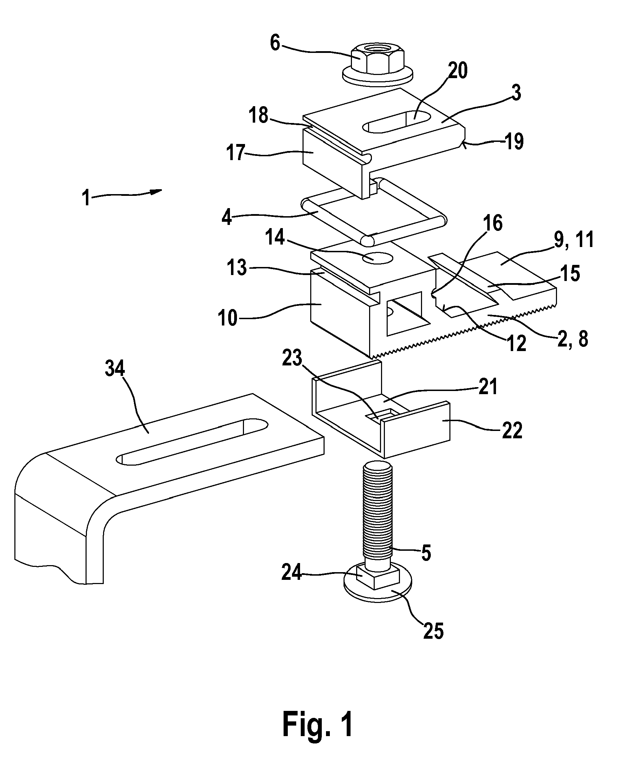

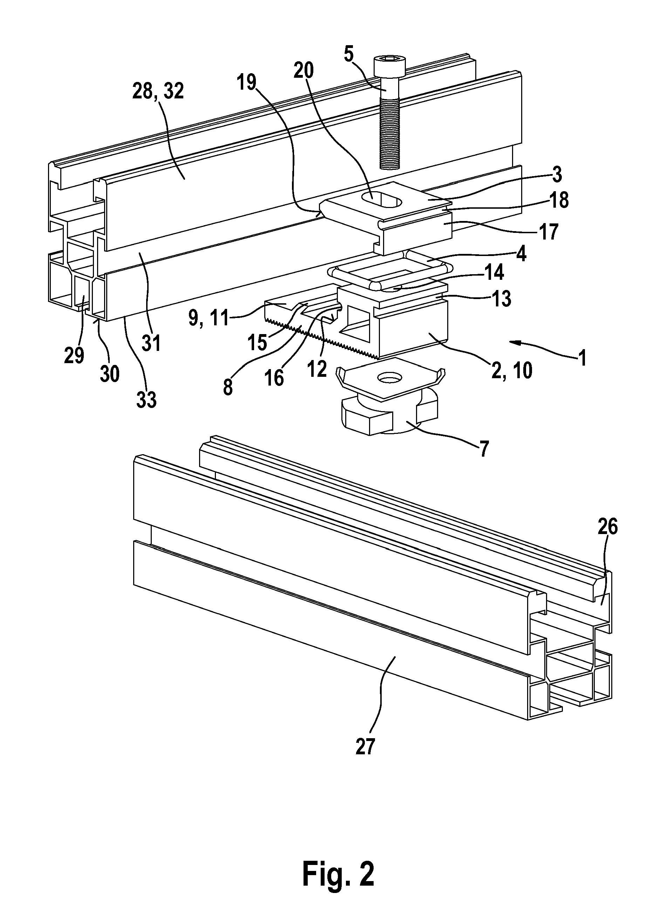

Der in Figuren 1 und 2 dargestellte, erfindungsgemäße Verbinder 1 weist einen Grundkörper 2 und eine plattenförmige Spannpratze 3 auf. Des Weiteren ist ein Gummiring 4 als Federelement vorhanden, der zwar als Rechteckring gezeichnet, in entspanntem Zustand aber an sich ein kreisförmiger Ring ist. Eine Spannschraube 5, die mit einer Mutter 6 oder in Figur 2 mit einem Nutenstein 7, der ein Innengewinde aufweist, zusammenwirkt, bildet eine Spanneinrichtung des Verbinders 1. In Figur 1 ist die Spannschraube 5 eine Schlossschraube, in Figur 2 ist sie eine Innensechskantschraube.

Der Grundkörper 2 ist durch Strangpressen aus einer Aluminiumlegierung hergestellt, er weist über seine Breite eine gleich bleibende Schnittfläche auf. Schnittfläche meint die Längs- oder Querschnittfläche, je nach Blickrichtung. Der Grundkörper 2 weist eine in Draufsicht rechteckige Grundplatte 8 auf, deren Unterseite eine Riffelung aufweist. An einem Ende steht von einer Oberseite 9 der Grundplatte 8 ein Lagerbock 10 nach oben ab, der die Form eines Vierkantrohrs aufweist. In die Oberseite 9, die eine Auflage 11 bildet, geht der Lagerbock 10 mit einer Schräge über, die eine Gleitfläche 12 bildet. Auf einer gegenüberliegenden Seite weist der Lagerbock 10 nahe seiner Oberseite eine über eine Breite des Grundkörpers 2 durchgehende Nut 13 auf. Der Lagerbock 10 ist mit einem ihn senkrecht zur Grundplatte 2 durchsetzenden Loch 14 versehen. Ungefähr in einer Mitte zwischen dem Lagerbock 10 und einem freien Rand weist die Auflage 11 einen Steg 15 auf, der sich parallel zum Lagerbock 10 über die Breite des Grundkörpers 2 erstreckt und schräg nach oben und in Richtung zum Lagerbock 10 von der Auflage 11 absteht. Der Steg wird hier als Haken 15 bezeichnet. An einer der Auflage 11 zugewandten Seite weist der Lagerbock 10 eine Nut 16 mit gerundetem Nutgrund ungefähr in halber Höhe des Lagerbocks 10 auf. Der Lagerbock 10 und der den Haken 15 bildende Steg sind mit der Grundplatte 8 einstückige Bestandteile des Grundkörpers 2.

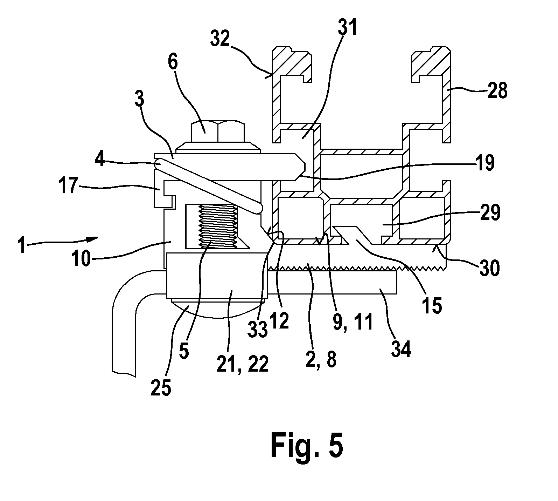

Die plattenförmige Spannpratze 3 liegt bei zusammengebautem Verbinder 1 auf der Oberseite des Lagerbocks 10 auf. Die Spannpratze 3 weist einen Hakensteg 17 auf, der in zusammengebautem Zustand in die Nut 13 des Lagerbocks 10 eingreift, wie in Figur 5 zu sehen ist. Der Hakensteg 17 weist Spiel in der Nut 13 auf, er bildet mit der Nut 13 eine gelenkige Verbindung, die ein Schwenken der Spannpratze 3 nach oben, d.h. mit ihrem dem Hakensteg 17 fernen Rand weg von der Auflage 11, ermöglicht. Zudem bildet der Hakensteg 17 durch seine Anlage an der Seite des Lagerbocks 10 eine Verdrehsicherung der Spannpratze 3 am Grundkörper 2.

Oberhalb des Hakenstegs 17 weist eine Stirnseite der Spannpratze 3 eine Nut 18 mit gerundetem Nutgrund auf. In diese Nut 18 und die Nut 16 auf der gegenüberliegenden Seite des Spannbocks 10 wird der das Federelement bildende Gummiring 4 eingehängt. Er hält die Spannpratze 3 verliersicher am Lagerbock 10 und damit am Grundkörper 2 und beaufschlagt die Spannpratze 3 im Sinne einer sich vergrößernden Überdeckung der Gleitfläche 12 am Übergang vom Lagerbock 10 zur Auflage 11. Der Gummiring 4 hält den Hakensteg 17 der Spannpratze 3 in Anlage an der Seite des Lagerbocks 10 und den Hakensteg 17 in der Nut 13 auf dieser Seite des Lagerbocks 10.

Die Spannpratze 3 ist länger als der Lagerbock 10, sie steht auf der Seite der Grundplatte 8 über den Lagerbock 10 über, wenn der Hakensteg 17 am Lagerbock 10 anliegt. In dieser Stellung überdeckt die Spannpratze 3, senkrecht von oben auf die Auflage 11 gesehen, zumindest die Gleitfläche 12 am Übergang vom Lagerbock 10 zur Auflage 11 (Figur 5). Ein dem Hakensteg 17 gegenüberliegender Rand der Spannpratze 3 weist an der Ober- und der Unterseite eine Fase auf, die Schrägen 19 bilden. Die Spannpratze 3 ist mit einem Langloch 20 versehen, das sich senkrecht zum Hakensteg 17 erstreckt.

Die Spannschraube 5 durchsetzt das Loch 14 im Lagerbock 10 des Grundkörpers 2 und das Langloch 20 der Spannpratze 3, oberhalb der die Mutter 6 auf die Schraube 5 aufgeschraubt ist. Mit der Mutter 6 lässt sich die Spannpratze 3 nach unten gegen den Lagerbock 10 spannen. In Figur 2 ist die Spannschraube 5 von oben durch das Langloch 20 der Spannpratze 3 und durch das Loch 14 im Lagerbock 10 des Grundkörpers 2 gesteckt und unterhalb des Grundkörpers 2 in den Nutenstein 7 eingeschraubt, der wie erwähnt ein Innengewinde aufweist.

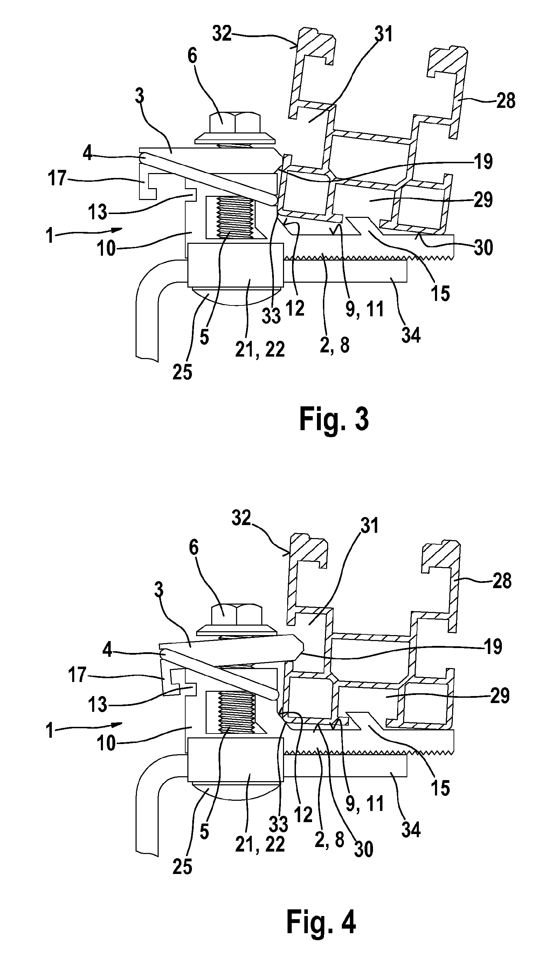

Zur Befestigung mit dem in Figur 1 gezeichneten Dachhaken 34 wird zusätzlich ein an beiden Seiten in derselben Richtung abgewinkeltes, also C-förmiges Blech als Drehsicherungselement 21 verwendet. Das Drehsicherungselement 21 wird von unten an den Dachhaken 34 gesetzt, seine abgewinkelten Seiten 22 stehen nach oben und übergreifen Seitenränder sowohl des Dachhakens 34 als auch der Grundplatte 8 des Grundkörpers 2, wie in Figuren 3-5 zu sehen ist. Die abgewinkelten, an den Seiten des Dachhakens 34 und des Grundkörpers 2 anliegenden Seiten 22 des das Drehsicherungselement 21 bildenden Blechs verhindern eine Verdrehung des Grundkörpers 2 auf dem Dachhaken 34. In seiner Mitte weist das Drehsicherungselemen 21 ein quadratisches Loch 23 auf, durch das die in Figur 1 als Schlossschraube ausgebildete Spannschraube 5 durchtritt. Durch Formschluss eines Vierkants 24 auf der Unterseite eines Schraubenkopfs 25 der als Schlossschraube ausgebildeten Spannschraube 5 im quadratischen Loch 23 des Drehsicherungselements 21 ist die Spannschraube 5 drehfest gehalten und muss zum Festziehen der Mutter 6 nicht gegengehalten werden.

In Figur 2 wird der Nutenstein 7 in eine hinterschnittene Längsnut 26 einer Profilschiene 27 eingeführt. Diese Art der Befestigung ist an sich bekannt und braucht hier nicht näher erläutert zu werden.

Die Befestigung einer Profilschiene 28 am Verbinder 1 wird nachfolgend anhand Figuren 3-5 erläutert: Die Profilschiene 28 weist eine hinterschnittene Längsnut 29 an einer Längsseite 30 und eine weitere Längsnut 31 an einer angrenzenden Längsseite 32 auf. Die weitere Längsnut 31 kann hinterschnitten sein wie im Ausführungsbeispiel, eine Hinterschneidung der weiteren Längsnut 31 ist jedoch nicht zwingend. Die Profilschiene 28 wird mit der Längsseite 30, die die hinterschnittene Längsnut 29 aufweist, auf die Auflage 11 aufgesetzt, welche die Oberseite 9 der Grundplatte 8 des Grundkörpers 2 bildet. Dabei ist die angrenzende Längsseite 32, die die weitere Längsnut 31 aufweist, dem Lagerbock 10 des Grundkörpers 2 zugewandt. Eine Längskante 33 der Profilschiene 28 zwischen den beiden angrenzenden Längsseiten 30, 32 sitzt beim Aufsetzen der Profilschiene 28 auf der schrägen Gleitfläche 12 des Grundkörpers 2 am Übergang vom Lagerbock 10 in die Grundplatte 8 bzw. die Auflage 11 auf. Der schräg nach oben und zum Lagerbock 10 stehende Steg, der den Haken 15 bildet, taucht in die hinterschnittene Längsnut 29 der Profilschiene 28 ein.

Die dem Lagerbock 10 zugewandte Längsseite 32 der Profilschiene 28 mit der weiteren Längsnut 31 stößt gegen den die Schrägen 19 aufweisenden Rand der Spannpratze 3 und drückt die Spannpratze 3 gegen die Kraft des Gummirings 4 zur Seite nach außen. Sobald ein Rand der weiteren Längsnut 31 unter die untere Schräge 19 der Spannpratze 3 gelangt, drückt der Rand der weiteren Längsnut 31 die Spannpratze 3 nach oben und der Gummiring 4 schiebt die Spannpratze 3 in die weitere Längsnut 31 hinein, wie es in Figur 4 zu sehen ist.

Anschließend wird die Mutter 6 festgezogen und spannt die Spannpratze 3 nach unten. Die Spannpratze 3, die in die Längsnut 31 der Profilschiene 28 eingreift, drückt die Profilschiene 28 nach unten, so dass die Längskante 33 auf der schrägen Gleitfläche 12 des Grundkörpers 2 des Verbinders 1 nach unten rutscht, bis die die hinterschnittene Längsnut 29 aufweisende Längsseite 30 der Profilschiene 28 auf der Auflage 11 aufliegt. Aufgrund ihrer Schräge schiebt die Gleitfläche 12 die Hinterschneidung der Längsnut 29 unter den als schräg stehenden Steg ausgebildeten Haken 15, der von der Auflage 11 schräg nach oben und in Richtung des Lagerbocks 10 absteht. Wenn, wie es vorgesehen ist, die Längsseite 30 der Profilschiene 28 auf der Auflage 11 des Grundkörpers 2 aufliegt, hintergreift der Haken 15 die Hinterschneidung der Längsnut 29 und hält dadurch die Profilschiene 28 auf der Grundplatte 8 des Grundkörpers 2. Zusätzlich hält die Spannpratze 3, die in die weitere Längsnut 31 eingreift, die Profilschiene 28 auf der Grundplatte 8 des Grundkörpers 2 des Verbinders 1. Die auf der Grundplatte 8 befestigte Stellung der Profilschiene 28 zeigt Figur 5. Zugleich ist der Verbinder 1 mit der als Schlossschraube ausgebildeten Spannschraube 5 am Dachhaken 34 befestigt.

In Figur 2 ist der Verbinder 1 mit dem Nutenstein 7 auf der Profilschiene 27 befestigt, die von der Profilschiene 28 gekreuzt wird, die auf dem Verbinder 1 befestigt ist. Beide Profilschienen 27, 28 weisen im Ausführungsbeispiel den gleichen Querschnitt auf.

### Bezugszeichenliste

**Verbinder für eine Profilschiene**
- 1: Verbinder
- 2: Grundkörper
- 3: Spannpratze
- 4: Gummiring
- 5: Spannschraube
- 6: Mutter
- 7: Nutenstein
- 8: Grundplatte
- 9: Oberseite
- 10: Lagerbock
- 11: Auflage
- 12: Gleitfläche
- 13: Nut
- 14: Loch
- 15: Haken
- 16: Nut
- 17: Hakensteg
- 18: Nut
- 19: Schräge
- 20: Langloch
- 21: Drehsicherungselement
- 22: Seite
- 23: Loch
- 24: Vierkant
- 25: Schraubenkopf
- 26: Längsnut
- 27: Profilschiene
- 28: Profilschiene
- 29: Längsnut
- 30: Längsseite
- 31: Längsnut
- 32: Längsseite
- 33: Längskante
- 34: Dachhaken

## Patentansprüche

1. Verbinder für eine Profilschiene (28), die eine hinterschnittene Längsnut (29) auf einer Längsseite (30) und eine weitere Längsnut (31) an einer angrenzenden Längsseite (32) aufweist, mit einem Grundkörper (2), der eine Auflage (11) für die die hinterschnittene Längsnut (29) aufweisende Längsseite (30) der Profilschiene (28) aufweist, wobei von der Auflage (11) ein Haken (15) zum Hintergreifen der hinterschnittenen Längsnut (29) absteht, und mit einer Spanneinrichtung (5, 6, 7), **dadurch gekennzeichnet, dass** der Grundkörper (2) eine zur Auflage (11) hin fallend verlaufende, dem Haken (15) zugewandte Gleitfläche (12) für die Profilschiene (28) aufweist, der der Haken (15) zugewandt ist, und dass der Verbinder (1) eine Spannpratze (3) aufweist, die mit Abstand von der Auflage (11) des Grundkörpers (2) angeordnet und parallel zur Auflage (11) beweglich ist, die senkrecht zur Auflage (11) gesehen die Gleitfläche (12) überdeckt und die mit der Spanneinrichtung (5, 6, 7) in Richtung der Auflage (11) spannbar ist.

2. Verbinder nach Anspruch 1, **dadurch gekennzeichnet, dass** sich ein Zwischenraum zwischen dem Haken (15) und der Auflage (11) in Richtung von der Gleitfläche (12) weg verengt.

3. Verbinder nach Anspruch 1, **dadurch gekennzeichnet, dass** der Grundkörper (2) eine gleich bleibende Schnittfläche über seine Breite aufweist.

4. Verbinder nach Anspruch 1, **dadurch gekennzeichnet, dass** der Grundkörper (2) auf der Seite der Gleitfläche (12) einen Lagerbock (10) für die Spannpratze (3) aufweist, der die Spannpratze (3) in einer Höhe über der Auflage (11) hält, die etwas kleiner ist als ein Abstand der weiteren Längsnut (31) der Profilschiene (28) von der die hinterschnittene Längsnut (29) aufweisenden Längsseite (30) der Profilschiene (28).

5. Verbinder nach Anspruch 1, **dadurch gekennzeichnet, dass** die Spannpratze (3) eine Schräge (19) an ihrem die Gleitfläche (12) überdeckenden Rand aufweist, die der Gleitfläche (12) zugewandt ist.

6. Verbinder nach Anspruch 1, **dadurch gekennzeichnet, dass** der Verbinder (1) ein Federelement (4) aufweist, das die Spannpratze (3) im Sinne einer Überdeckung der Auflage (11) beaufschlagt.

7. Verbinder nach Anspruch 1, **dadurch gekennzeichnet, dass** die Spanneinrichtung eine Spannschraube (5) aufweist.

8. Verbinder nach Anspruch 1, **dadurch gekennzeichnet, dass** der Verbinder (1) ein Drehsicherungselement (21, 22) aufweist, das entlang eines Seitenrandes des Grundkörpers (2) über eine der Auflage (11) abgewandte Unterseite des Grundkörpers (2) übersteht.

9. Verbinder nach Anspruch 1, **dadurch gekennzeichnet, dass** die Spannpratze (3) eine gelenkige Verbindung (13, 17) mit dem Grundkörper (2) aufweist, die ein Schwenken der Spannpratze (3) weg von der Auflage (11) ermöglicht.

10. Verbinder nach Anspruch 1, **dadurch gekennzeichnet, dass** der Verbinder (1) eine Verdrehsicherung (17) aufweist, die die Spannpratze (3) gegen Verdrehen gegenüber dem Grundkörper (2) sichert.
